Europäisches Patentamt

European Patent Office

Office européen des brevets

(19)

(11) **EP 1 036 915 B1**

(12) **FASCICULE DE BREVET EUROPEEN**

(45) Date de publication et mention
de la délivrance du brevet:
**10.11.2004 Bulletin 2004/46**

(51) Int Cl.7: **E21B 19/22**, F16L 1/23,
B21D 3/05

(21) Numéro de dépôt: **00400375.2**

(22) Date de dépôt: **09.02.2000**

(54) **Méthode et dispositif pour contrôler la déformation d'une conduite métallique déroulée**

Verfahren und Vorrichtung zum Steuern der Verformung eines abgewickelten Metallrohres

Method and device for controlling the deformation of an unrolled metal pipe

(84) Etats contractants désignés:
**DK GB IT NL**

(30) Priorité: **15.03.1999 FR 9903194**

(43) Date de publication de la demande:
**20.09.2000 Bulletin 2000/38**

(73) Titulaire: **Institut Français du Pétrole**
**92852 Rueil-Malmaison Cedex (FR)**

(72) Inventeurs:
• **Averbuch, Daniel**
**92500 Rueil Malmaison (FR)**
• **Perrin, Gilles**
**78000 Versailles (FR)**

(56) Documents cités:
WO-A-96/08605          DE-A- 4 003 258
DE-C- 19 503 850       GB-A- 2 299 286
US-A- 4 345 855        US-A- 4 571 821
US-A- 4 776 221        US-A- 5 527 134
US-A- 5 767 671

## Description

La présente invention concerne une méthode et un dispositif pour contrôler les déformations d'un tube métallique en mesurant les contraintes internes au matériau métallique du tube. Le domaine de l'invention se situe, de préférence, dans l'industrie pétrolière offshore dans laquelle on utilise des conduites métalliques de transport d'effluent qui ont été enroulées sur de grand touret, transportées, puis déroulées afin d'être déposées au fond de la mer, ou suspendues, par des bateaux de pose équipés des moyens de manutentions spécifiques, notamment du type chenilles de traction.

Dans un autre domaine, tel le forage ou les opérations dans un puits de production, on utilise également des tubes métalliques enroulés appelés "coiled tubing". Ces tubes, de dimension diamétrale entre 1" (25,4 mm) et jusqu'à 4" (101,6 mm), sont également enroulés sur un touret de 2 à 3 m de diamètre. Ils sont utilisés pour être descendus dans le puits pour effectuer des opérations de forage, d'injection de gaz ou de liquide, de nettoyage, de mesure, etc.

Dans ces techniques, les tubes sont enroulés sous déformations plastiques car les rayons de courbures des tourets procurent des contraintes de flexion importantes par rapport à la limite élastique des matériaux utilisés.

Aussi, quand les tubes sont déroulés pour être, soit posés sur le fond de la mer, soit suspendus, soit déplacés dans un puits, le matériau peut conserver un niveau de contraintes résiduelles notable. Les moyens de manutention, tels des chenilles de traction, comprennent généralement un dispositif redresseur du tube consistant en une série d'au moins trois rouleaux (ou équivalent) qui applique une contrainte de flexion contraire à la courbure rémanente du tube après son déroulement, généralement dans un seul plan.

On a constaté que les tubes une fois déroulés présentent généralement de trop fortes contraintes internes qui engendrent souvent des déformations géométriques gênantes et même néfastes en opérations.

Document GB 2 299 286 (correspondant au préambule des revendications indépendentes), montre un dispositif qui diminue les déformations avec des guides ajustables. US 5 527 134 correspond aussi au préambule des revendications indépendentes.

Ainsi, la présente invention concerne une méthode de manutention d'un tube enroulé comportant au moins une enveloppe métallique déformée plastiquement par l'enroulement sur une bobine cylindrique, le tube une fois déroulé étant introduit dans un système de redressage. Selon la méthode, on effectue au moins les opérations suivantes:

- ■ on mesure les contraintes dans le tube une fois déroulé,
- ■ on pilote ledit système de redressage en fonction desdites mesures de contraintes de façon à obtenir en sortie du redresseur une répartition et un niveau déterminés de contraintes dans la paroi métallique dudit tube.

On peut mesurer les contraintes en aval et/ou en amont du redresseur.

On peut imposer une répartition de contraintes dans le tube de façon que le tube ait une courbure déterminée après passage dans le redresseur.

On peut mesurer les contraintes sensiblement le long de toute la circonférence du tube.

On peut imposer un champ de contrainte au tube de façon à optimiser sa limite de flambage en compression dans un puits.

On peut calculer un moment de flexion selon au moins une direction orthogonale à l'axe du tube, à partir des mesures de contrainte dans ledit tube.

L'invention concerne également un dispositif redresseur pour la manutention d'un tube enroulé comportant au moins une enveloppe métallique déformée plastiquement par l'enroulement sur une bobine cylindrique, le tube une fois déroulé étant introduit dans ledit système de redressage. Le dispositif comporte au moins:

- ■ des moyens de mesure des contraintes dans le tube une fois déroulé,
- ■ des moyens de réglage du redressage,
- ■ des moyens de commande du réglage dudit dispositif de redressage en fonction desdites mesures de contraintes de façon à obtenir en sortie du redresseur une répartition et un niveau déterminés de contraintes dans la paroi métallique dudit tube.

Les moyens de mesure des contraintes peuvent être disposés en amont des moyens de réglage du redressage.

Des moyens de mesure peuvent être disposés en aval des moyens de réglage du redressage.

Les deux ensembles d'appuis et de centrage, espacés à une distance déterminée, peuvent maintenir le tube et un ensemble de vérins disposé entre lesdits appuis peut être piloté pour déformer le tube en appui sur les deux ensembles selon un champ de contraintes désiré.

Au moins quatre vérins opposés deux à deux et selon deux directions orthogonales peuvent constituer les moyens de redressage pilotés.

Au moins trois vérins répartis à 120 degrés autour du tube, peuvent constituer les moyens de redressage pilotés.

Les moyens de mesure peuvent comporter une série de capteurs fixes répartis autour de la circonférence du tube.

Les moyens de mesure peuvent comporter au moins un capteur monté sur un dispositif tournant autour du tube.

La présente invention sera mieux comprise et ses avantages apparaîtront plus clairement à la lecture de la description des exemples suivants, nullement limitatifs, illustrés par les figures ci-après annexées, parmi lesquelles:

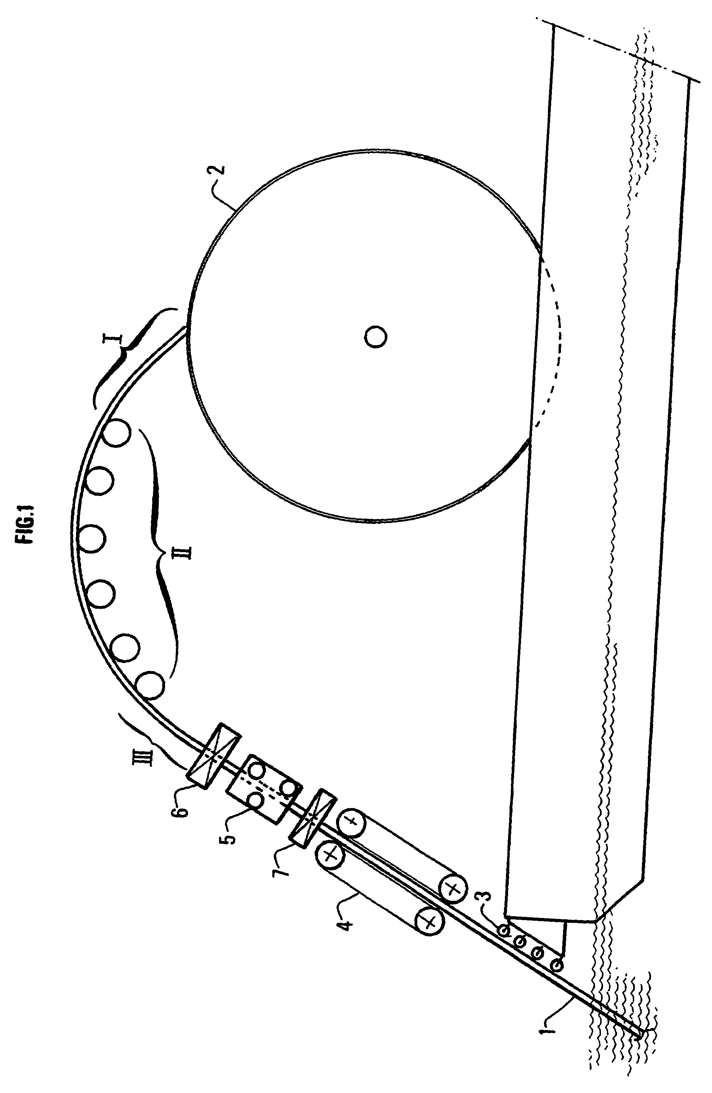

■ la figure 1 illustre schématiquement le dispositif selon l'invention appliqué à la pose en mer de conduite rigide;

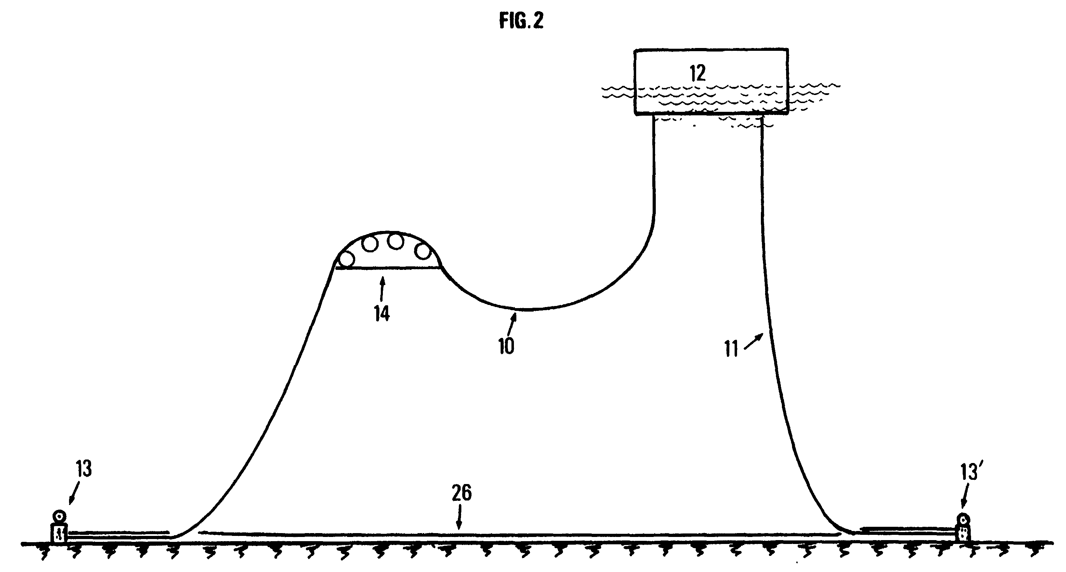

■ la figure 2 montre schématiquement un exemple de configuration de conduite en mer;

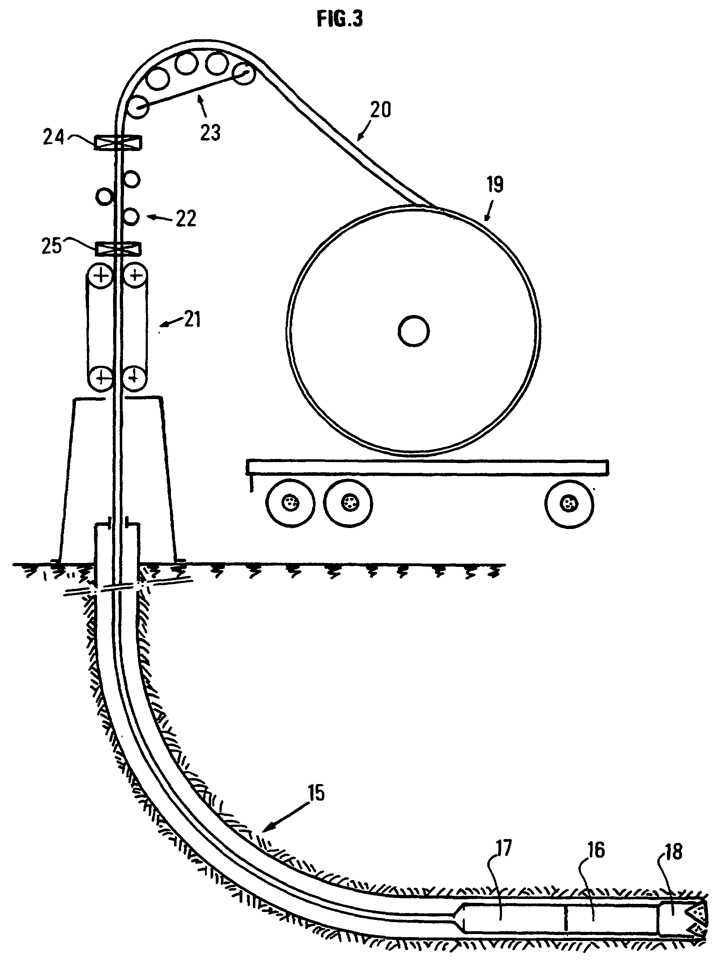

■ la figure 3 montre schématiquement le dispositif selon l'invention appliqué au "coiled tubing";

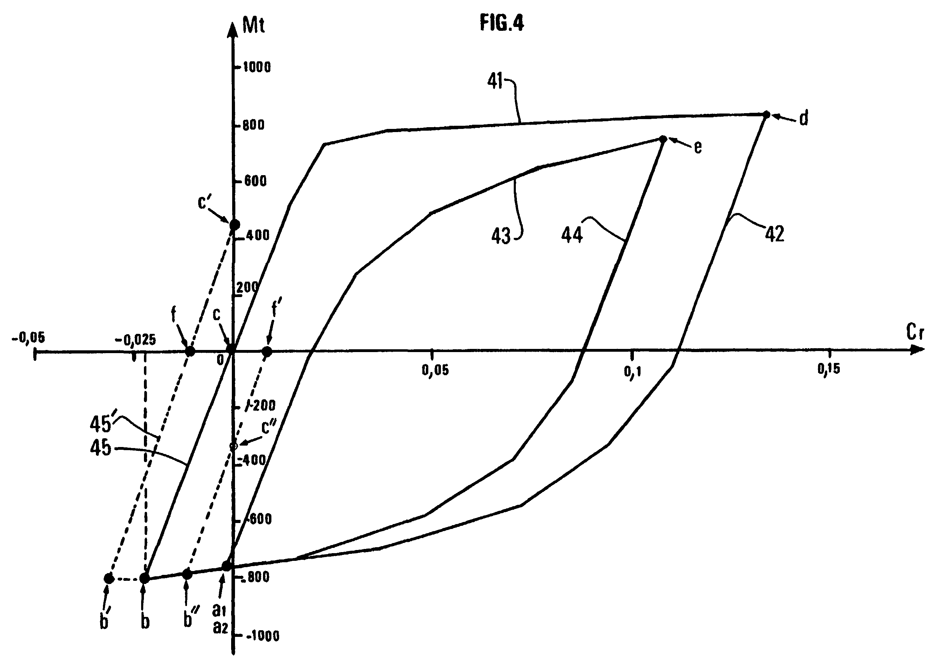

■ la figure 4 montre un graphique de la fonction moment de flexion/courbure pour un tube pendant les opérations d'enroulement/déroulement;

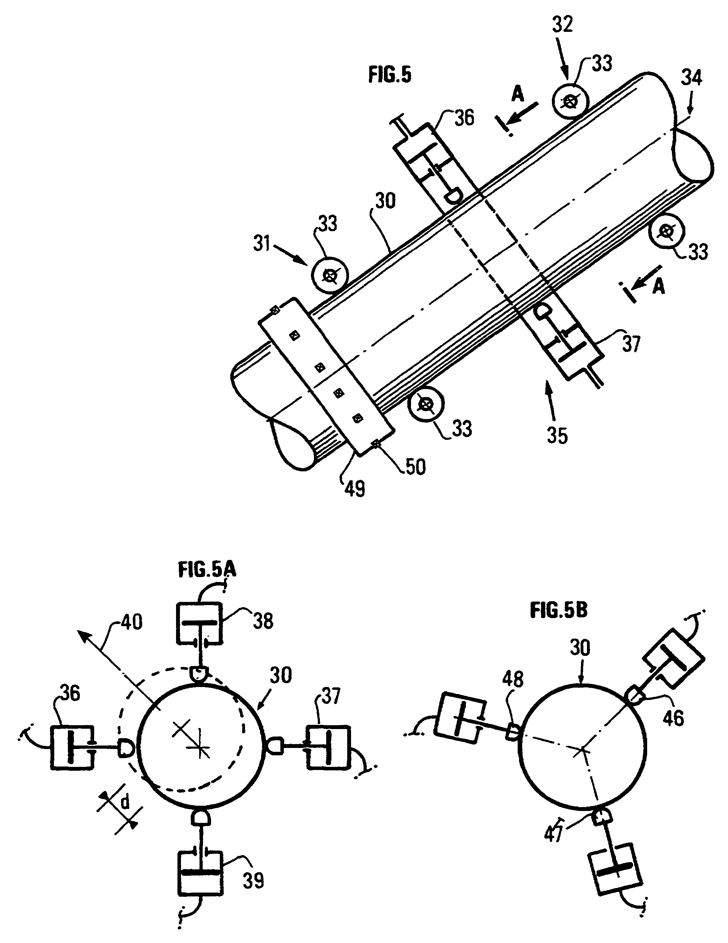

■ les figures 5, 5a et 5b montrent le schéma de principe d'un redresseur selon l'invention.

La méthode selon l'invention nécessite la mise en oeuvre d'une technique de mesure des contraintes dans la section d'un tube métallique. On connaît, par exemple, les documents US 5016200, 5170366 ou 5503020 qui décrivent le principe de mesures suivant : on mesure les variations de la vitesse de propagations dans plusieurs directions d'une onde acoustique émise par un seul ou plusieurs capteurs, la vitesse étant directement proportionnelle à l'état de contraintes dans les différentes directions. Cette technologie EMAT™ (ElectroMagnetic Acoustic Transducers) et ASG™ (Jauge Acoustique de Déformation™) a été développée par la société SonicForce™. Le principe général consiste donc en la génération d'ondes ultrasonores à l'intérieur d'un matériau par l'emploi des traducteurs Acoustiques Electromagnétiques EMAT™, puis en une mesure réalisée par les jauges acoustiques de déformation ASG. Cette méthode de mesure est sans contact et repose sur la variation du "temps de vol" des ondes ultrasonores créées par les générateurs EMAT™. Ce système permet d'effectuer 3000 mesures par seconde et peut fonctionner dans des environnements difficiles, y compris dans le cas de fortes vibrations. Cette technologie, nullement limitative, paraît bien adaptée à la mise en oeuvre de la présente invention. Bien entendu, il est possible que les moyens de mesures soient modifiés et optimisés pour les produits spécifiques que sont les tubes rigides déroulés.

Les moyens de mesures des contraintes permettent d'obtenir une moyenne, dans l'épaisseur du tube rigide, des contraintes selon l'axe z du tube $\sigma_z(\theta)$ en fonction de l'angle azimutal $\theta$. Ce sont ces contraintes qui vont être modifiées par les flexions successives subies par le tube. Les moyens de mesure peuvent comporter plusieurs capteurs répartis sur la circonférence du tube, ou un dispositif tournant autour du tube, permettant ainsi la mesure des contraintes sur toute la circonférence.

Cette connaissance des contraintes permet de calculer les moments de flexion auxquels est soumis le tube par intégration dans la section des formules suivantes :

$$Mx = R^2.t\int_0^{2\pi} \sigma_z(\theta).\sin\theta.d\theta$$

$$My = R^2.t\int_0^{2\pi} \sigma_z(\theta).\cos\theta.d\theta$$

avec R rayon du tube et t épaisseur de la paroi du tube. Les axes x et y forment un repère orthogonal dans le plan perpendiculaire à l'axe z du tube.

La figure 1 représente schématiquement une barge de pose au fond de la mer d'une conduite rigide 1 enroulée sur un touret 2. Selon la technique connue des tubes rigides enroulés, le stockage sur le touret de la longueur de conduite nécessaire, après soudure des tronçons, se fait à terre dans des installations adaptées. Le support flottant se déplace ensuite vers le lieu de pose où le tube 1 est déroulé du touret 2 de façon à, par exemple, constituer au fond de la mer une ligne de transport ("flow line") d'un effluent entre une tête de puits sous-marine et un stockage, ou une conduite de remontée de l'effluent vers la surface ("riser"). Une rampe de guidage 3 soutient le tube en amorce de la traversée de la tranche d'eau. Généralement ce support est à l'arrière du support flottant. Pour manutentionner en sécurité le tube 1, que ce soit dans le sens descente ou dans le sens remontée, on utilise un dispositif dit de "tensionnement" 4 comprenant au moins un couple de chenilles serrées sur le tube et entraînées en déplacement longitudinal par des moteurs. Dans le sens descente du tube, compte tenu de son poids, le tensionneur fonctionne en retenue. Le tube 1 étant enroulé en déformation plastique sur le touret 2, lors de son déroulement, il est à nouveau plastifié : le long de la zone I (où le tube est sensiblement rectiligne); le long de la zone II (où il est à nouveau courbé); le long de la zone III (où il est de nouveau rectiligne). Cependant, il est clair qu'il subsiste au sein du matériau un certain champ de contraintes résiduelles. Pour cette raison, et également pour que le passage du tube dans les tensionneurs s'effectue au mieux, on redresse le tube en amont des tensionneurs en utilisant un système de redressage 5. Selon la présente invention, on dispose, de plus, de moyens de mesure 6 du champ de contraintes en amont du redresseur 5. Le système de redresseur est ici spécifique, dans la mesure où il comporte des moyens mécaniques de redressage pouvant être asservis selon une commande. La commande est principalement issue des moyens de mesure 6 du champ de contraintes. Dans une variante de l'asservissement, on peut adjoindre à l'installation un deuxième ensemble de mesure des contraintes 7 en aval du redresseur, mais en amont des tensionneurs. Ce deuxième point de mesure permet de compléter l'asservissement en constituant une boucle de régulation.

Ainsi, selon la présente invention, on peut contrôler la rectitude du tube en sortie du redresseur. En effet, pour que le tube reste sensiblement droit, les moments internes de flexion doivent être pratiquement nuls en sortie du redresseur. Si ce n'est pas le cas, le tube aura tendance à se courber de manière à rendre nuls les moments de flexion.

Dans une autre application, on peut imposer une configuration du tube par un préformage élasto-plastique déterminé de la conduite. Cette opération pourrait permettre d'adopter des tubes rigides pour certaines des configurations de conduites en production pétrolière offshore classiquement réservées à des conduites flexibles. La figure 2 illustre un exemple de ces configurations. On pourra trouver d'autres exemples de configurations offshore en page 38 de "Applications of Subsea Systems" par Goodfellow Associates Ltd, édité par PennWell Publishing Company (Tulsa), ouvrage cité ici en référence.

La figure 2 représente une conduite 10 sensiblement en configuration dite "Lazy Wave". La conduite 10 est liée, au fond de la mer à une tête de puits, ou un manifold 13, et en surface à une support flottant 12. Un ensemble de flotteurs 14 donne une courbure en forme d'arche en subsurface. Cette configuration impose des courbures à la conduite. Dans le cas d'utilisation de conduites rigides, il peut être avantageux de préformer ces conduites selon des courbures adaptées à ladite configuration. La conduite 11 est suspendue selon une configuration caténaire à une autre tête de puits 13'. Dans cette configuration également, le préformage du tube peut présenter des avantages. La conduite 26 est une "flow line", c'est à dire une conduite posée au fond de la mer entre deux têtes de puits 13 et 13'. Cette conduite ne subit plus de tension, sauf celle due à l'effet de fond crée par la pression interne.

La figure 3 illustre une autre application de la méthode selon l'invention dans le domaine du forage ou de la production des puits pétroliers. Un puits 15 est foré à l'aide d'une garniture de fond 16 comprenant un moteur de fond 17 et un outil de forage 18. La garniture de fond est manoeuvrée dans le puits 15 par un tube d'acier continu 20, appelé "coiled tubing" dans la profession. Il s'agit d'un tube métallique stocké sur un touret 19 d'environ 2 à 3 mètres de diamètre. Un système à chenilles verticales 21, dit "injecteur" déplace le "coiled tubing" dans le puits. Selon la présente invention, un dispositif de redressage 22, généralement à galets, est placé en amont de l'injecteur et en aval du col de cygne 23. Des moyens de mesure 24 des contraintes dans le tube pilotent le redressage. On peut aussi placer en aval du redressage d'autres moyens de mesure 25 des contraintes après redressage du tube.

Le principe du redressage consiste à obtenir des moments de flexions nuls lorsque le tube est droit, c'est à dire en sortie du redresseur. Une mesure des moments de flexion permet donc de piloter le redresseur de manière à obtenir cet état. Ainsi, la figure 4 représente l'évolution du moment de flexion Mt (en ordonnée et en kN.m) en fonction de la courbure Cr (en abscisse et en m$^{-1}$) lors des étapes d'enroulement/déroulement dans un plan. A partir de la connaissance du comportement des matériaux, on peut déterminer comme suit le moment de flexion au cours de l'enroulement/déroulement jusqu'au point a2 où la courbure est nulle, à l'entrée du redresseur.

Le point origine c représente le tube rectiligne soudé avant enroulement sur la bobine. La courbe référencée 41 représente, de c à d, l'enroulement du tube sur la bobine. La courbe 42, entre d et a1 représente le déroulement du tube et son redressement rectiligne le long de la zone I (figure 1). On note qu'au point a1, la courbure est nulle mais que le moment Mt est important. La courbe 43, entre a1 et e, représente la courbure appliquée au tube dans la zone II (figure 1). A partir du point e, la courbe 44 représente le retour à la rectitude du tube en zone III (figure 1) en amont du redresseur 5. Le moment en a2 (ici de l'ordre de 800 kN.m) peut être mesuré au moyen des capteurs de contraintes 6 (figure 1). Dans le présent cas de figure, les points a1 et a2 sont superposés, ce qui n'est pas la généralité. Le point b représente l'action du redresseur actif 5 qui déforme le tube en une courbure opposée (dans cet exemple de l'ordre de 0,025, soit environ 40 m de rayon). Le réglage du redresseur a pour objet que la courbe de relaxation 45 des efforts aboutisse à l'origine c où le tube est théoriquement rectiligne et stable (moment nul et courbure nulle).

Le point b' représente un autre réglage du redresseur piloté 5, par lequel la courbe de relaxation 45' conduit à un moment de flexion nul pour une courbure de 0,01 m$^{-1}$ (point f), ou à un état rectiligne avec une moment fléchissant de 450 kN.m (point c'). Cet exemple montre bien l'action du redresseur piloté qui permet d'ajuster l'état de contrainte dans le matériau du tube.

Un autre réglage b" montre que l'on peut obtenir une courbure résiduelle dans le sens opposé (point f'), ou un autre champ de contrainte.

On note sur la figure 4, que la mesure du moment fléchissant Mt après le redresseur est un bon indicateur de la rectitude du tube, car cette quantité varie de façon notable pour de faibles variations de la courbure.

Le principe du redressage consiste donc à piloter l'amplitude de la contre-flexion induite par le redresseur (position du point b, b' ou b") par la valeur du moment fléchissant aux points a2, c, c' ou c".

L'invention peut consister à redresser le tube dans au moins deux directions. La mesure des contraintes permettant de calculer les moments de flexion autour de deux axes du plan, il est possible de disposer, soit de deux redresseurs en série à action orthogonale, soit d'un redresseur spécifique dont les moyens de déformation pilotés autorisent des redressages dans plusieurs directions.

La figure 5 montre schématiquement le principe d'un tel redresseur. Le tube 30 déroulé passe dans le dispositif de redressage comprenant deux zones d'appui 31 et 32 constituées, par exemple par des rouleaux 33, qui maintiennent centrées sur l'axe 34 les sections du tube dans des zones 31 et 32. Il peut y avoir seulement deux rouleaux opposés dans le cas de moyens de redressage uni-directionnel, ou un ensemble de rouleaux répartis autour de la circonférence du tube dans le cas de moyens de redressage multi-directionnels. Les moyens de déformation et de redressage 35 sont placés entre les deux zones de centrage 31 et 32. Ces moyens sont ici des rouleaux montés sur des vérins hydrauliques 36 et 37. En fonction d'une commande réglant le déplacement des tiges de vérins, on appuie latéralement sur le tube pour effectuer la déformation désirée, compte tenu des contraintes mesurées en amont. Le mode de régulation d'un tel déplacement est connue dans la profession et ne sera pas détaillée ici. En général, un capteur de déplacement sur la tige des vérins commande une unité de génération de puissance hydraulique et la distribution de fluide dans lesdits vérins. Ainsi, en fonction d'un niveau de contraintes mesurées, on détermine la flexion et la direction qu'il faut appliquer au tube 30. La flexion est fonction du déplacement d'un vérin dans la direction déterminée. Le pilotage consiste, dans cet exemple, à envoyer une consigne de régulation à la centrale hydraulique pour obtenir un déplacement fixé de l'un ou des deux vérins 36, 37. Les appuis peuvent aussi être réalisés avec des systèmes à chenille qui présentent l'avantage de procurer un appui plus long. Il peut en être de même pour les moyens de redressage.

La référence 49 illustre les moyens de mesure constitués par des capteurs 50 montés, par exemple, sur une couronne. La couronne peut être fixe par rapport au tube, c'est à dire qu'elle n'est pas, dans ce cas, animée d'un mouvement de rotation. Dans ce cas, la mesure des contraintes tout autour de la circonférence du tube se fait par une série de capteurs répartis régulièrement sur la couronne. La couronne peut également être rotative, c'est à dire que le ou les capteurs sont entraînés en rotation autour du tube de façon à effectuer des mesures circonférentielles. Si la fréquence d'acquisition des capteurs est insuffisante pour faire la mesure en défilement du tube, la couronne peut être animée en plus d'un mouvement de translation pour être relativement immobile par rapport au tube pendant la mesure.

La figure 5a montre en vue axiale un exemple de moyens de redressage comportant deux ensembles de vérins opposés et orthogonaux : 36, 37 et 38, 39. La figure 5a illustre schématiquement la possibilité de déformer en flexion le tube dans toutes les directions. Grâce à une régulation plus complexe des quatre vérins, il est possible de fléchir le tube dans la direction référencée 40 et correspondant au déplacement d. La distribution du fluide hydraulique doit alors se faire selon des consignes différentes pour chaque vérin. Cette technique impose donc un programme de calcul et de pilotage plus complexe.

La figure 5b représente une variante du dispositif à trois galets 46, 47 et 48. Le principe du redressage et du pilotage est semblable à celui de la figure 5a

L'invention ne se limite pas à ce type de redresseur, il existe d'autres moyens mécaniques pour effectuer la déformation en flexion d'un tube, par exemple en utilisant des vérins à vis à commande électrique ou mécanique.

## Revendications

1. Méthode de manutention d'un tube enroulé (1) comportant au moins une enveloppe métallique déformée plastiquement par l'enroulement sur une bobine cylindrique (2), ledit tube une fois déroulé étant introduit dans un système de redressage (5) caractérisée en que l'on effectue au moins les opérations suivantes:

   ■ on mesure les contraintes dans le tube une fois déroulé,
   ■ on pilote ledit système de redressage (5) en fonction desdites mesures de contraintes de façon à obtenir en sortie du redresseur une répartition et un niveau déterminés de contraintes dans la paroi métallique dudit tube.

2. Méthode selon la revendication 1 dans laquelle on mesure les contraintes en aval et/ou en amont du redresseur.

3. Méthode selon l'une des revendications précédentes dans laquelle on impose une répartition de contraintes dans le tube de façon que ledit tube ait une courbure déterminée après passage dans le redresseur.

4. Méthode selon l'une des revendications précédentes dans laquelle on mesure les contraintes sensiblement le long de toute la circonférence du tube.

5. Méthode selon l'une des revendications précédentes, dans laquelle on impose un champ de contrainte au tube de façon à optimiser sa limite de flambage en compression dans un puits.

6. Méthode selon l'une des revendications précédentes, dans laquelle on calcule un moment de flexion selon au moins une direction orthogonale à l'axe du tube, à partir des mesures de contrainte dans ledit tube.

7. Dispositif redresseur pour la manutention d'un tube enroulé (1) comportant au moins une enveloppe métallique déformée plastiquement par l'enroulement sur une bobine cylindrique (2), ledit tube une fois déroulé étant introduit dans un système de redressage (5) des moyens de réglage du redressage, **caractérisé en qu'**il comporte au moins:

■ des moyens de mesure des contraintes (6, 7) dans le tube une fois déroulé,
■ des moyens de commande du réglage dudit dispositif de redressage en fonction desdites mesures de contraintes de façon à obtenir en sortie du redresseur une répartition et un niveau déterminés de contraintes dans la paroi métallique dudit tube.

8. Dispositif selon la revendication 7, dans lequel les moyens de mesure (6) des contraintes sont disposés en amont des moyens de réglage du redressage.

9. Dispositif selon l'une des revendications 7 ou 8, dans lequel des moyens de mesure (7) sont disposés en aval des moyens de réglage du redressage.

10. Dispositif selon l'une des revendications 7 à 9, dans lequel deux ensembles d'appuis et de centrage (31, 32), espacés à une distance déterminée, maintiennent ledit tube et dans lequel un ensemble de vérins (35) disposé entre lesdits appuis est piloté pour déformer le tube en appui sur lesdits deux ensembles selon un champ de contraintes désiré.

11. Dispositif selon la revendication 10, dans lequel au moins quatre vérins (36, 37, 38, 39) opposés deux à deux et selon deux directions orthogonales constituent les moyens de redressage pilotés.

12. Dispositif selon la revendication 10, dans lequel au moins trois vérins (46, 47, 48) répartis à 120 degrés autour du tube, constituent les moyens de redressage pilotés.

13. Dispositif selon l'une des revendications 7 à 12, dans lequel lesdits moyens de mesure comportent une série de capteurs fixes (50) répartis autour de la circonférence du tube.

14. Dispositif selon l'une des revendications 7 à 12, dans lequel lesdits moyens de mesure comportent au moins un capteur monté sur un dispositif tournant (49) autour du tube.

**Claims**

1. Method for handling a coiled tube (1) comprising at least one metal envelope deformed plastically by the coiling on a cylindrical reel (2), said tube once uncoiled being introduced into a straightening system (5), **characterised in that** at least the following operations are carried out:

   • the stresses are measured in the tube once uncoiled,
   • said straightening system (5) is controlled as a function of said stress measurements so as to obtain a given distribution and level of stresses in the metal wall of said tube on leaving the straightening system.

2. Method according to claim 1, in which the stresses are measured downstream and/or upstream of the straightening system.

3. Method according to one of the preceding claims, in which a distribution of stresses is imposed in the tube so that said tube has a given curvature after passing through the straightening system.

4. Method according to one of the preceding claims, in which the stresses are measured substantially along the entire circumference of the tube.

5. Method according to one of the preceding claims, in which a field of stress is imposed on the tube so as to optimise its buckling limit in compression in a well.

6. Method according to one of the preceding claims, in which a moment of flexion is calculated in at least one direction at right angles to the axis of the tube, from the stress measurements in said tube.

7. Straightening device for handling a coiled tube (1) comprising at least one metal envelope deformed plastically by the coiling on a cylindrical reel (2), said tube once uncoiled being introduced into a straightening system (5), and means for adjustment of the straightening, **characterised in that** it comprises at least:

   • means for measurement of the stresses (6, 7) in the tube once uncoiled,
   • means for control of the adjustment of said straightening device as a function of said stress measurements so as to obtain a given distribution and level of stresses in the metal wall of said tube on leaving the straightening system.

8. Device according to claim 7, in which the means for measurement (6) of the stresses are disposed upstream of the means for adjustment of the straightening.

9. Device according to one of claims 7 or 8, in which means for measurement (7) are disposed downstream of the means for adjustment of the straightening.

10. Device according to one of claims 7 to 9, in which two supporting and centring assemblies (31, 32) spaced a given distance apart, hold said tube and in which a set of jacks (35) disposed between said supports is controlled to deform the tube supported on said two assemblies according to a desired field of stress.

11. Device according to claim 10, in which at least four jacks (36, 37, 38, 39) arranged in opposition two by two and in two directions at right angles constitute the controlled straightening means.

12. Device according to claim 10, in which at least three jacks (46, 47, 48) distributed at 120 degrees around the tube, constitute the controlled straightening means.

13. Device according to one of claims 7 to 12, in which said means for measurement comprise a series of fixed pick-ups (50) distributed around the circumference of the tube.

14. Device according to one of claims 7 to 12, in which said means for measurement comprise at least one pick-up mounted on a device (49) turning around the tube.

**Patentansprüche**

1. Verfahren zur Handhabung eines aufgerollten Rohrs (1), umfassend wenigstens einen metallischen, plastisch durch Aufrollen auf eine zylindrische Trommel (2) verformten Mantel, wobei das Rohr einmal aufgerollt in ein Biegesystem (5) eingeführt wird, **dadurch gekennzeichnet, dass** man wenigstens einen der folgenden Vorgänge durchführt:

   - man misst die Verspannungen in dem einmal aufgerollten Rohr,
   - man steuert das Biegesystem (5) in Abhängigkeit dieser Messungen von Verspannungen derart, dass am Ausgang des Verbiegers eine Verteilung und ein festgelegter Grad von Verspannungen in der metallischen Wand des Rohrs erhalten werden.

2. Verfahren nach Anspruch 1, in dem man die Verspannungen vor und/oder hinter dem Verbieger misst.

3. Verfahren nach einem der vorhergehenden Ansprüche, bei dem man eine Verteilung von Verspannungen in dem Rohr derart auferlegt, dass das Rohr eine nach Durchgang in dem Verbieger festgelegte Krümmung hat.

4. Verfahren nach einem der vorhergehenden Ansprüche, in dem man die Verspannungen im Wesentlichen entlang des gesamten Umfangs des Rohrs misst.

5. Verfahren nach einem der vorhergehenden Ansprüche, in dem man dem Rohr ein Verspannungsfeld derart auferlegt, dass sein Knickgrenze beim Drükken in ein Bohrloch optimiert wird.

6. Verfahren nach einem der vorhergehenden Ansprüche, bei dem man ein Biegemoment gemäß wenigstens einer zur Rohrachse orthogonalen Richtung ausgehend von Verspannungsmessungen in dem Rohr berechnet.

7. Verbiegevorrichtung zur Handhabung eines aufgerollten Rohrs (1), umfassend wenigstens einen metallischen, plastisch durch Aufrollen auf eine zylindrische Trommel (2) verformten metallischen Mantel, wobei das Rohr einmal aufgerollt in das Biegesystem (5) eingeführt wird, Mittel zur Regelung des Verbiegens, **dadurch gekennzeichnet, dass** sie wenigstens umfasst:

   - Mittel zum Messen der Verspannungen (6,7) in dem einmal aufgerollten Rohr,
   - Mittel zur Steuerung der Regelung der Verbiegevorrichtung in Abhängigkeit der Verspannungsmessungen derart, dass am Ausgang des Verbiegers eine Verteilung und ein Grad von Verspannungen in der metallischen Wand des Rohrs erhalten werden, die bestimmt sind.

8. Vorrichtung nach Anspruch 7, in der die Mittel zur Messung (6) der Verspannungen vor den Mitteln zur Steuerung des Verbiegens angeordnet sind.

9. Vorrichtung nach einem der Ansprüche 7 oder 8, in der die Mittel zur Messung (7) hinter den Mitteln zum Steuern des Verbiegens angeordnet sind.

10. Vorrichtung nach einem der Ansprüche 7 bis 9, in der die beiden Anordnungen zum Abstützen und Zentrieren (31,32) bei einem vorbestimmten Abstand beabstandet das Rohr halten und in der eine Anordnung von Spindeln (35), angeordnet zwischen den Stützen, gesteuert wird, um das Rohr gestützt gegen diese beiden Anordnungen gemäß einem gewünschten Kräftefeld zu deformieren.

11. Vorrichtung nach Anspruch 10, bei der vier Winden (36,37,38,39) paarweise und gemäß zwei orthogonalen Richtungen gegenüber gesteuerte Verbiegemittel bilden.

12. Vorrichtung nach Anspruch 10, bei der wenigstens drei Winden (46,47,48) bei 120° um das Rohr verteilt die gesteuerten Verbiegemittel bilden.

13. Vorrichtung nach einem der Ansprüche 7 bis 12, bei der die Messmittel eine Reihe von festen Sensoren (50) umfassen, die um den Umfang des Rohrs verteilt sind.

14. Vorrichtung nach einem der Ansprüche 7 bis 12, in der die Messmittel wenigstens einen Sensor, angebracht auf einer Drehvorrichtung (49) um das Rohr herum umfassen.

FIG.1

FIG.2

**FIG.3**

FIG.4

FIG.5

FIG.5A

FIG.5B